# DEMANDE DE BREVET EUROPEEN

(11) **EP 1 076 464 A1**
(43) Date de publication de la demande: **14.02.2001**
(21) Numéro de dépôt: 00402176.2
(22) Date de dépôt: 28.07.2000
(51) Int. Cl.: H04Q 7/22

(54) **Réseau de radiotéléphonie comportant un centre de gestion des communications entre terminaux et centre de gestion et terminal pour un tel réseau**

(30) Priorité: 03.08.1999 FR 9910082
(71) Demandeur: SAGEM SA, 75116 Paris (FR)
(72) Inventeur: Vermande, Michel, 95770 Montreuil sur Epte (FR)
(74) Mandataire: Bloch, Gérard

(57) **Abrégé**

Le réseau de radiotéléphonie comporte une pluralité de terminaux (8) et un centre de gestion (1, 2) de ces terminaux (8) qui comprend des circuits (21) pour offrir aux terminaux (8) des prestations de nature téléphonique, telles que conférence, et des circuits (22) de traitement de commandes de prestation de ces terminaux (8).

## Description

La présente invention a pour origine le problème que pose la gestion en temps réel des déplacements de personnes assurant un service, telles que les conducteurs d'une flotte de véhicules comme des taxis, ambulances, voitures de livraison, de dépannage et autres.

Chaque conducteur de véhicule est relié par un réseau radio à un centre de gestion dont l'opérateur lui indique par exemple les déplacements successifs qu'il doit effectuer.

Cependant les réseaux radio actuels sont limités à la transmission de la parole entre l'opérateur et le conducteur, alors que ce dernier souhaiterait disposer, par téléphone, d'autres services, qu'ils soient purement téléphoniques, comme par exemple la conférence, ou qu'ils permettent la transmission de données, comme la messagerie électronique. Bref, l'utilisateur d'un téléphone mobile souhaite disposer de tous les services dont dispose l'utilisateur d'un téléphone ou terminal de données dans une entreprise.

La présente invention vise à satisfaire ce besoin.

A cet effet, l'invention concerne tout d'abord un réseau de radiotéléphonie, comportant une pluralité de terminaux et un centre de gestion de ces terminaux, caractérisé par le fait que le centre de gestion comprend des moyens pour offrir aux terminaux des prestations de nature téléphonique, et des moyens de traitement de commandes de prestation de ces terminaux.

Ainsi, l'utilisateur d'un terminal radio du réseau peut sélectionner les prestations de nature téléphonique du centre de gestion qui lui sont utiles et ainsi en disposer à distance du centre.

Avantageusement, le centre de gestion est agencé pour assurer lui-même des prestations de nature téléphonique.

Le centre de gestion forme ainsi un ensemble fonctionnel intégré présentant une autonomie pour la fourniture des prestations.

En variante ou en complément, les moyens de traitement sont agencés pour commander des prestations de nature téléphonique à des prestataires et les transmettre aux terminaux.

Les moyens de traitement peuvent ainsi faire appel à une grande diversité de prestataires externes au centre de gestion.

L'invention concerne aussi un centre de gestion pour le réseau de l'invention, comportant des moyens pour offrir aux terminaux des prestations de nature téléphonique et des moyens de traitement de commandes de prestation de ces terminaux.

L'invention concerne enfin un terminal de radiotéléphonie pour le réseau de l'invention, agencé pour recevoir, par téléchargement, des données de configuration du terminal.

L'invention sera mieux comprise à l'aide de la description suivante d'une forme de réalisation préférée du réseau de radiotéléphonie de l'invention, en référence au dessin annexé, sur lequel
- la figure 1 est un schéma par blocs d'une première forme de réalisation du réseau de radiotéléphonie de l'invention, comportant un réseau cellulaire radiotéléphonique, ici GSM/GPRS, et un centre de gestion de terminaux du réseau GSM/GPRS, relié à un autocommutateur et à un réseau informatique local, et
- la figure 2 est un schéma par blocs d'une seconde forme de réalisation du centre de gestion.

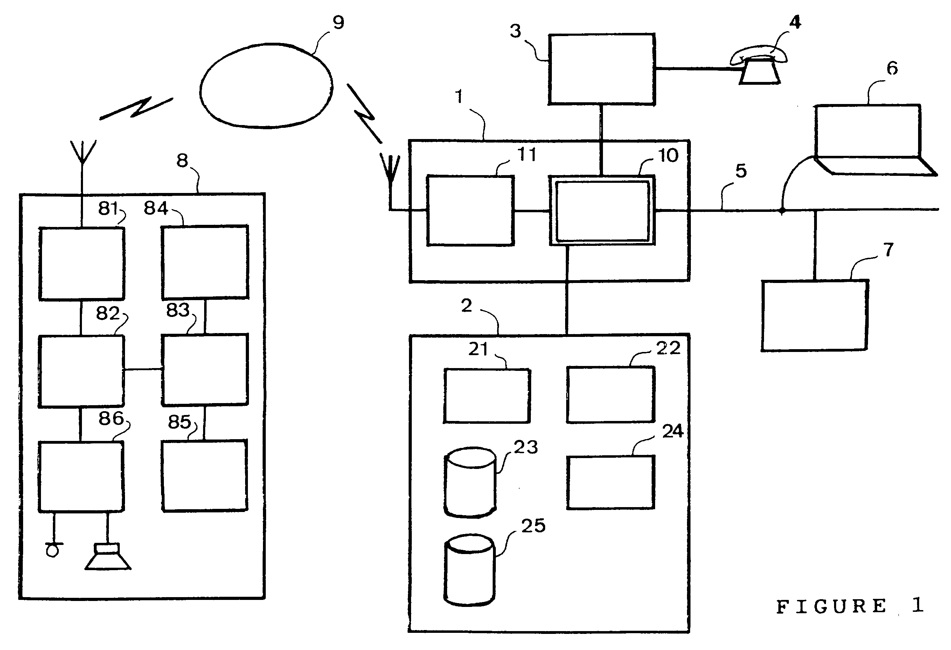

Le réseau de radiotéléphonie de la figure 1 comporte un réseau 9 de transmission téléphonique, ici le réseau cellulaire radiotéléphonique GSM/GPRS (Service Radio Paquets Global) à transmission de paquets au format de l'INTERNET, dont des terminaux ou combinés 8 d'abonnés, ici des livreurs d'une société, sont gérés par un centre de gestion 1, 2 situé dans le site de la société de livraison de marchandises. La référence 1 désigne une passerelle de liaison entre le réseau GSM/GPRS 9 et un ensemble de gestion référencé 2, la passerelle 1 comportant des circuits 11 de liaison au réseau 9, reliés à une matrice 10 de commutation de voies téléphoniques qui est aussi reliée à l'ensemble de gestion 2.

La passerelle 1 est en outre reliée, par la matrice 10, à un autocommutateur téléphonique 3, ici à commutation temporelle, de raccordement de postes téléphoniques supplémentaires 4 et à un réseau informatique local 5, ici INTRANET, de raccordement d'équipements informatiques 6, ici des terminaux de traitement de données. Des circuits 7 prestataires de service de nature téléphonique, ici de messagerie de courrier électronique, sont reliés à la passerelle 1, à travers le réseau informatique local 5 dans cet exemple.

L'ensemble de gestion 2 est relié au réseau 9 à travers les circuits 11 et la matrice 10. L'ensemble de gestion 2 comporte des circuits 21 pour offrir aux combinés 8, à travers la passerelle 1, des prestations de nature téléphonique et comporte des circuits 22 de traitement des commandes de prestation, commandes provenant des combinés 8 par la passerelle 1. L'ensemble de gestion 2 commande les prestations de nature téléphonique à des prestataires internes ou externes au centre et les transmet aux terminaux 8. Dans cet exemple, les prestataires externes sont le PABX 3, les terminaux 6 et les circuits 7. Dans un autre exemple, ces prestataires pourraient être en dehors du site du centre de gestion et reliés à celui-ci par un réseau de transmission d'informations, comme par exemple le réseau téléphonique commuté RTC, le réseau GSM 9 ou l'INTERNET. Certains des prestataires sont ici intégrés au centre de gestion 1, 2, qui assure ainsi lui-même des prestations de nature téléphonique requises par les combinés 8. Plus précisément, l'ensemble de gestion 2 comporte une base 23 de droits des combinés 8, un serveur 24, appelé serveur métier, et une mémoire d'agenda 25.

Dans le cas présent, le centre de gestion 1, 2 est un intermédiaire entre les combinés 8 et un réseau local de transmission d'informations à travers lequel sont fournies certaines des prestations, c'est-à-dire ici le PABX 3 ou encore le réseau informatique 5.

Le combiné 8 d'abonné comporte des circuits radio 81 classiques d'un terminal GSM, pour en particulier l'échange de paquets de signaux numériques et de signalisations à travers le réseau 9, ainsi que des circuits écran/clavier 84 et un bloc audio 86 pour émettre, par radio vers la passerelle 1, respectivement restituer, les signaux phoniques provenant d'un microphone du combiné 8 et ceux destinés à un haut-parleur du combiné 8.

Il comporte en outre un circuit 82 de codage/décodage des paquets GPRS, reliant les circuits 81, 86, et relié à un circuit 83 de signalisation, lui-même relié aux circuits écran/clavier 84 et à une mémoire 85 de programme et d'agenda. La mémoire 85 peut en particulier être téléchargée depuis la mémoire 25 et le serveur 24, à travers la passerelle 1 et les circuits 81, 82, 83.

Le fonctionnement du réseau de radiotéléphonie va maintenant être expliqué plus en détails.

L'ensemble de gestion 2 peut être appelé par radio depuis le combiné 8 pour lui offrir des prestations de nature téléphonique par les circuits 21, afin que le combiné 8 transmette aux circuits de traitement 22 une requête pour une prestation ou service de nature téléphonique, par exemple la messagerie des circuits 7, ou encore la conférence téléphonique. Cette offre peut par exemple consister en une annonce vocale ou en un menu de prestations ou services, émis(e) par les circuits 21 et restituée par les circuits audio 86 ou affiché sur l'écran des circuits 84 du combiné 8. La requête en réponse est saisie par le clavier des circuits 84 et mise en forme par les circuits 83, 82 sous forme de paquet IP émis par le circuit 81.

Comme évoqué ci-dessus, la prestation demandée peut être fournie par des circuits internes au centre 1, 2 ou externes et reliés à celui-ci par le réseau INTRANET 5, par les liaisons avec l'autocommutateur 3 ou encore par d'autres liaisons, par exemple l'INTERNET. La prestation téléphonique de conférence est ici fournie par la matrice 10, l'autocommutateur 3 contribuant à cette prestation en reliant des postes tels que 4 à divers circuits de conférence de la matrice 10.

Lorsqu'ils reçoivent ainsi une requête de prestation téléphonique, les circuits de traitement 2 commandent en conséquence, dans la passerelle 1, la matrice 10 pour mettre en relation le combiné 8 avec les circuits de fourniture de la prestation de nature téléphonique demandée.

Une requête, de conférence téléphonique par exemple, est constituée par un message comportant un mot de code spécifique d'une telle requête. Après reconnaissance de ce mot de code, les circuits de traitement 22 appellent la matrice 10, qu'ils commandent à cet effet, et lui transmettent le mot de code de requête de conférence. Les circuits de traitement 22 commandent ensuite la matrice 10 pour que le prolongement local filaire de la liaison radio qui les relie au combiné 8 soit détourné des circuits de traitement 22 et relie directement le terminal 8 à matrice 10. Le combiné 8 envoie ensuite directement à la matrice 10 les numéros des postes 4 ou combinés 8 avec lesquels il souhaite établir une conférence. La matrice 10 fait alors sonner ces postes 4 ou combinés 8 et établit la conférence lorsqu'ils répondent.

Ainsi, l'ensemble de gestion 2 qui était interposé dans la liaison en deux tronçons (radio et local) entre le combiné 8 et la matrice 10, se retire de cette liaison une fois qu'il a traité la requête de prestation de service du combiné 8. Le combiné 8 est donc un requérant maître qui, vis-à-vis de la matrice 10, se substitue alors à l'ensemble de gestion 2 qu'il commandait. L'ensemble de gestion 2 est ainsi, temporairement, un requérant intermédiaire, esclave, servant au combiné 8 à accéder au prestataire de service dont l'ensemble de gestion 2 connaît l'adresse (numéro de téléphone, adresse informatique). Le centre de gestion 2 peut aussi servir d'adaptateur pour transformer le format des requêtes reçues afin qu'elles soient comprises par le prestataire, par exemple le mot de code de conférence. Dans d'autres cas, l'ensemble de gestion 2 a simplement une fonction de commande d'aiguillage de l'appel du combiné 8 vers le prestataire voulu, par exemple les circuits 7 de messagerie, dont il détermine l'adresse (nom, et donc numéro d'appel, du réseau à appeler et adresse dans le réseau) d'après un mot de code indiquant la prestation requise.

Le combiné 8 peut aussi accéder, par requête auprès de l'ensemble de gestion 2, à une fonction annuaire, dans l'autocommutateur 3 par exemple, c'est-à-dire transmettre le nom du ou des correspondants qu'il souhaite atteindre pour une conférence ou une communication classique. En pareil cas, l'ensemble de gestion 2 lit un annuaire des postes 4 et combinés 8 stocké dans l'autocommutateur 3, et acquiert ainsi le numéro voulu, pour l'appeler et mettre le combiné 8 en liaison avec le poste 4 appelé. L'annuaire peut d'ailleurs, sur requête du combiné 8 auprès de l'ensemble de gestion 2, être téléchargé dans le combiné 8 depuis la passerelle 1 à travers la matrice 10. L'utilisateur du combiné 8 peut alors le parcourir pour sélectionner un correspondant et émettre son numéro de téléphone pour l'appeler par le réseau 9 directement, ou bien indirectement par son nom, à travers l'ensemble de gestion 2 qui transforme ce nom en numéro d'appel et le transmet à la matrice 10, comme expliqué plus haut pour la conférence.

Dans un autre exemple de requête, le combiné 8 transmet une requête pour l'établissement prioritaire d'une communication avec un poste 4 ou combiné comme 8 occupé. En pareil cas, si la base de données 23, de droits des abonnés (8), confirme ce droit, ce dernier commande la matrice 10 pour couper la communication du poste 4 ou 8, qui reçoit alors une tonalité d'invitation à raccrocher. En pareil cas, le poste 4 ou combiné est sonné et, à son décrochage, mis en communication avec le combiné 8 à travers la matrice 10. En variante, le combiné 8 intervient en tiers sur la communication en cours, en se substituant, avec une tonalité d'intrusion, au correspondant du poste 4 ou combiné comme 8 ou par établissement d'une conférence à trois. L'ensemble de gestion 2 se comporte comme une opératrice d'autocommutateur, qui peut signaler, par intrusion sur une communication établie, l'arrivée d'un appel vers l'un des correspondants en cours de communication.

Le combiné 8 peut recevoir du centre de gestion 1, 2, par téléchargement depuis le serveur métier 24 ici intégré à l'ensemble de gestion 2, des données permettant de configurer le combiné 8 selon une application particulière déterminée, c'est-à-dire les fonctions du métier (livreur) exercé par le porteur du combiné 8. En particulier, le serveur 24 peut y télécharger des données de configuration déterminant la fonction de touches des circuits de relations homme-machine 84. Par exemple, une touche aura la fonction @ utilisée pour exploiter les logiciels de navigation INTERNET. Dans ce contexte, l'ensemble de gestion 2 peut de même commander le téléchargement d'un logiciel adapté à l'INTERNET, pour la navigation dans celui-ci par exemple, et mémorisé dans le serveur métier 24, par exemple sous forme d'applets du langage JAVA, qui, en particulier, particularisent certaines touches des circuits 84. On rappellera qu'une applet est un logiciel universel qui peut être implanté sur toute machine, ici combiné, indépendamment de sa structure physique. Le serveur métier 24 particularise ainsi par téléchargement les combinés 8 qui, de simples combinés téléphoniques GSM, deviennent par programmation des combinés dédiés à une application ou métier déterminé. L'agenda stocké dans la mémoire 25 de l'ensemble de gestion 2 peut de même être téléchargé dans les combinés 8.

Le circuit de codage-décodage 82, en association avec le circuit de traitement de signalisations 83, aiguille les données radio reçues vers le bloc audio 86 ou vers l'écran des circuits 84, selon leur nature, phonique ou de données.

Il peut aussi être prévu de particulariser le combiné 8, selon une application ou métier déterminé, au moyen d'une carte à puce reçue dans un lecteur du combiné 8.

Le centre de gestion 1, 2 peut ainsi établir des communications de données ou phoniques au moyen de paquets de signaux traversant le réseau de radiotéléphonie 9. En particulier ici, la passerelle 1 pourrait être reliée au réseau de radiotéléphonie 9 à travers un réseau informatique de transmission de données, comme l'INTERNET, puisque les paquets qu'elle échange sont au format de l'INTERNET.

Pour un autre type de requête, le combiné 8 peut de même être relié à l'un des équipements informatiques 6 par l'INTRANET 5, pour y consulter par exemple une base de données ou encore pour y disposer de circuits de calcul puissants et en recevoir les résultats.

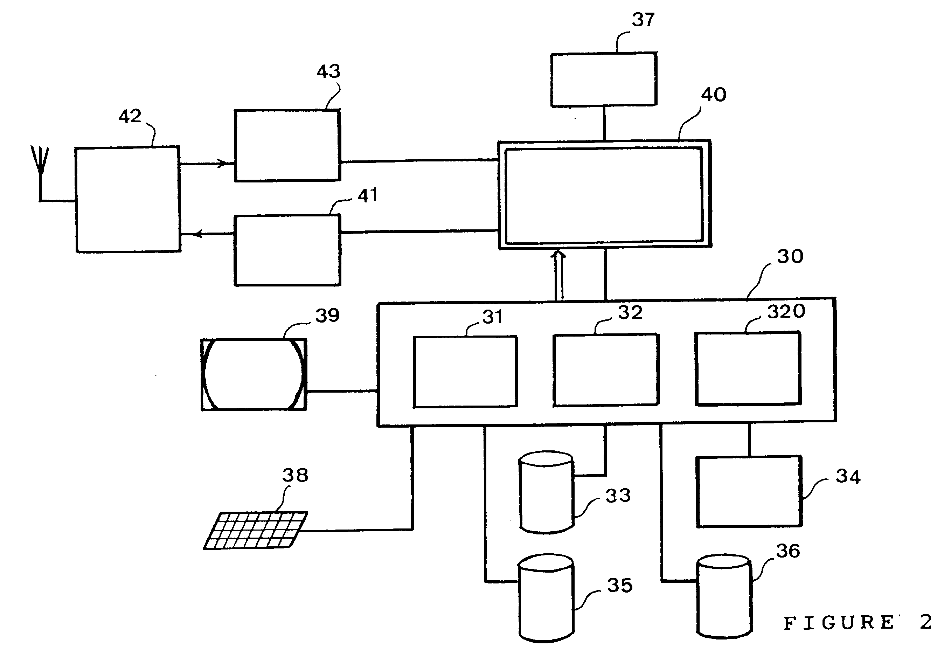

Le centre de gestion représenté sur la figure 2 est ici un PC qui regroupe aussi les prestataires de services de nature téléphonique qui, sur la figure 1, sont répartis sur un site. Les blocs fonctionnels référencés 30 à 35 correspondent aux blocs fonctionnels respectifs 20 à 25 de la figure 1. Plus précisément, la référence 30 désigne une unité centrale à microprocesseur qui gère l'ensemble des circuits et en particulier comporte les circuits 31 offrant aux combinés 8 les prestations de nature téléphonique, les circuits 22 de traitement des commandes de prestation, et ici un circuit 320 de traitement de messages courts SMS du réseau 9. La base 33 de droits des abonnés, le serveur métier 34, la mémoire d'agenda 35 et une mémoire 36 de numéros groupés d'abonnés (8) sont reliés à l'unité centrale 30.

Une matrice 40 de commutation, ici temporelle, de voies téléphoniques, comprend des circuits de commutation temporelle, à aiguillage par adressage, et des circuits mémoires pour en commander l'adressage. Ces derniers sont commandés par l'unité centrale 30 (double trait avec flèche), qui commande ainsi l'établissement et la rupture des connexions entre voies téléphoniques dans la matrice 40.

En ce qui concerne les signaux transmis dans les voies téléphoniques elles-mêmes, la matrice 40 est reliée à l'unité centrale 30 (trait simple), à un circuit de conférence téléphonique 37, à l'entrée d'un circuit 41 de codage de trames de signaux à émettre, relié à un circuit radio GSM émetteur-récepteur 42, et à la sortie d'un circuit 43 de décodage de trames de signaux provenant du réseau 9 à travers le circuit radio 42.

Les circuits 41 et 43, homologues du circuit 82, traitent ici des trames de bits dans des paquets au format de l'INTERNET, le réseau GSM/GPRS assurant des liaisons par paquets IP entre les combinés 8 et le centre de gestion. En émission, le circuit 41 forme des paquets IP à partir de bits ou d'octets de phonie ou de données issus de la matrice 40 et adapte ainsi le format des informations à émettre, en ajoutant en outre les champs de signalisation et d'adressage nécessaires au transport dans le réseau 9.

En particulier, un flux continu de signaux phoniques de téléphonie est transformé en paquets. En réception, le circuit 43 effectue les opérations inverses pour fournir à la matrice 40 un flux continu de signaux phoniques ou des données, exempt de signalisations liées au transport radio.

Le PC comporte en outre un clavier 38 et un écran 39 reliés à l'unité centrale 30.

Le fonctionnement des circuits ci-dessus va maintenant être expliqué.

Le principe général de fonctionnement du centre de gestion et avec les prestataires de la figure 2 est conforme à celui de la figure 1 et la description correspondante, toujours valable, ne sera donc pas répétée.

Lorsqu'un appel est lancé par un combiné 8 vers le centre de gestion, en vue d'obtenir une prestation de nature téléphonique, les circuits 42, 43 transmettent le message d'appel correspondant à l'unité centrale 30, à travers la matrice 40, dans laquelle l'unité centrale 30 a établi à cet effet des chemins de communication. Les circuits 31 émettent en retour un menu de prestations ou, simplement, mettent en communication les circuits de traitement 32 avec le combiné 8 pour que ceux-ci en reçoivent une requête éventuelle de prestation.

Les circuits de traitement 32, recevant une telle requête, consultent la base de données de droits 33 pour déterminer si l'abonné du combiné 8 a le droit d'obtenir le service requis, comme par exemple la conférence. Dans la négative, les circuits de traitement 32 commandent le circuit radio 42, à travers le circuit SMS 320 et la matrice 40 commandée à cet effet, pour émettre un message court SMS indiquant, sur l'afficheur des circuits 84, que le service requis n'est pas accessible. Dans l'affirmative, c'est un message invitant l'abonné à numéroter les numéros de postes demandés, qui peuvent être des combinés comme celui référencé 8 ou des postes téléphoniques classiques (4) accessibles par un autocommutateur, non représenté, ou par un réseau téléphonique externe. Une fois reçus, par l'unité centrale 30, les numéros de postes demandés, les circuits de traitement 32 appellent les abonnés correspondants, par radio (42) ou à travers des lignes téléphoniques locales, non représentées, reliées à la matrice 40. Les signaux vocaux des voies temporelles des divers postes sont alors additionnés dans les circuits de conférence 37 pour être ensuite rediffusées vers chacun des participants de la conférence. Plus précisément, s'il est prévu N participants par conférence, les circuits de conférence 37 comportent N additionneurs de signaux numériques de phonie pour chacun additionner un ensemble spécifique de N-1 signaux, c'est-à-dire pour renvoyer à chaque participant la somme des signaux phoniques des autres, à l'exclusion de ceux qu'il vient d'émettre. La matrice 40 sert donc ici à alimenter en signaux, par des voies entrantes, les circuits de conférence 37 et à aiguiller les divers signaux additionnés vers leur destinataire local ou éloigné (8).

Pour traiter les requêtes de prestation de nature téléphonique, l'unité centrale 30 dialogue avec le serveur métier 34, c'est-à-dire qu'une requête reçue du combiné 8 par les circuits de traitement 32 est transmise par ceux-ci au serveur métier 34 qui fournit en retour les commandes appropriées aux circuits de traitement 32. Le combiné 8 télécommande donc l'unité centrale 30, de pilotage de la matrice 40 et de fourniture de prestations, à travers le serveur métier 34.

Le serveur métier 34 permet ainsi d'adapter précisément les réponses de l'unité centrale 30 aux requêtes des combinés 8. Il peut d'ailleurs être prévu plusieurs serveurs 34 pour autant de métiers différents.

L'unité centrale 30 peut en outre, comme dans la réalisation de la figure 1, télécharger dans les combinés 8, depuis le serveur métier 34, des données de configuration des combinés 8, ou d'un groupe déterminé, selon une application, ou métier, déterminée. A cet effet, l'unité centrale 30 lit un fichier métier du serveur 34 et le transmet au circuit radio 42, à travers la matrice 40 commandée à cet effet et le circuit 41. Le serveur métier 34 est ainsi relié au combiné 8. On peut ainsi en particulier télécharger dans les combinés 8 un logiciel de navigation dans un réseau informatique comme l'INTERNET.

La mémoire 36 de numéros groupés d'abonnés sert à appeler tout un groupe de combinés 8 ou postes 4. L'utilisateur d'un combiné 8 émet à cet effet une requête comportant un mot de code indiquant un appel de groupe et une référence spécifiant le groupe à appeler. Les circuits de traitement 32, recevant cette requête, consultent la mémoire 36 et appellent alors tous les numéros du groupe désigné.

On peut ainsi établir une conférence téléphonique. On peut encore effectuer une diffusion, à partir du PC, d'un message associé à la requête d'appel de groupe, par exemple un courrier électronique. Ce courrier électronique peut avoir été envoyé au PC en même temps que la requête, ou bien il peut s'agir d'un message déjà en mémoire dans le PC et dont l'adresse de lecture est spécifiée dans la requête.

## Revendications

1. Réseau de radiotéléphonie, comportant une pluralité de terminaux (8) et un centre de gestion (1, 2) de ces terminaux (8), caractérisé par le fait que le centre de gestion (1, 2) comprend des moyens (21) pour offrir aux terminaux (8) des prestations de nature téléphonique et des moyens (22) de traitement de commandes de prestation de ces terminaux (8).

2. Réseau selon la revendication 1, dans lequel le centre de gestion (1, 2) est agencé pour assurer lui-même des prestations de nature téléphonique.

3. Réseau selon la revendication 2, dans lequel le centre de gestion (1, 2) comporte des moyens (37) pour établir des conférences.

4. Réseau selon l'une des revendications 1 à 3, dans lequel les moyens de traitement (22) sont agencés pour commander des prestations de nature téléphonique à des prestataires (3, 6, 7) et les transmettre aux terminaux (8).

5. Réseau selon la revendication 4, dans lequel le centre de gestion (1, 2) est un intermédiaire entre les terminaux (8) et un réseau local de transmission d'informations (3, 5).

6. Réseau selon l'une des revendications 1 à 5, dans lequel le centre de gestion comporte des moyens (30, 40, 41, 42) de téléchargement dans les terminaux (8), depuis un serveur métier (24) du centre, de données de configuration des terminaux (8) selon une application déterminée.

7. Réseau selon la revendication 6, dans lequel les données de configuration comportent un logiciel de navigation dans un réseau informatique (5).

8. Réseau selon l'une des revendications 1 à 7, dans lequel le centre de gestion comporte des circuits (41, 42, 43) de transmission de paquets de signaux d'information à travers le réseau.

9. Centre de gestion (1, 2) pour le réseau de la revendication 1, comportant des moyens (21) pour offrir aux terminaux (8) des prestations de nature téléphonique et des moyens (22) de traitement de commandes de prestation de ces terminaux (8).

10. Terminal de radiotéléphonie pour le réseau de la revendication 1, agencé pour recevoir, par téléchargement, des données de configuration du terminal (8).
